(19) Europäisches Patentamt
European Patent Office
Office européen des brevets

(11) EP 1 171 487 B1

(12) FASCICULE DE BREVET EUROPEEN

(45) Date de publication et mention de la délivrance du brevet:
**10.01.2007 Bulletin 2007/02**

(21) Numéro de dépôt: **00910929.9**

(22) Date de dépôt: **09.03.2000**

(51) Int Cl.:
***C08F 26/02*** (2006.01) ***C08F 8/12*** (2006.01)
***C08F 4/04*** (2006.01) ***C08F 4/40*** (2006.01)
***D21H 21/10*** (2006.01) ***C02F 1/56*** (2006.01)

(86) Numéro de dépôt international:
**PCT/FR2000/000604**

(87) Numéro de publication internationale:
**WO 2000/058378 (05.10.2000 Gazette 2000/40)**

# (54) PROCEDE DE SYNTHESE D'AGENTS FLOCULANTS ET COAGULANTS DE TYPE POLYVINYLAMINE (PVA) EN POUDRES

SYNTHESEVERFAHREN FÜR FLOCKUNGS- UND KOAGULIERUNGSMITTEL DES POLYVINYLAMINPULVER TYPS

PROCESS FOR SYNTHESIZING POWDER POLYVINYL AMINE (PVA) TYPE FLOCCULATING AND COAGULATING AGENTS

(84) Etats contractants désignés:
**AT BE CH CY DE DK ES FI FR GB GR IE IT LI LU MC NL PT SE**

(30) Priorité: **29.03.1999 FR 9903928**

(43) Date de publication de la demande:
**16.01.2002 Bulletin 2002/03**

(73) Titulaire: **SNF S.A.**
**42028 Saint-Etienne Cedex 1 (FR)**

(72) Inventeurs:
- **HUND, René**
**42390 Villars (FR)**
- **JEHN-RENDU, Christian**
**SNF S.A.**
**42028 Saint-Etienne Cedex 01 (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(56) Documents cités:
**EP-A- 0 295 614** **DE-A- 4 007 310**
**DE-A- 4 409 903** **DE-A- 19 710 212**
**US-A- 4 421 602** **US-A- 4 739 008**
**US-A- 5 290 880** **US-A- 5 739 190**

- **PATENT ABSTRACTS OF JAPAN vol. 006, no. 219 (C-132), 2 novembre 1982 (1982-11-02) & JP 57 121008 A (SUMITOMO KAGAKU KOGYO KK), 28 juillet 1982 (1982-07-28)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 171 487 B1

## Description

La présente Invention concerne le secteur technique des agents synthétiques présentant une action de floculant et/ou de coagulant.
Plus précisément, l'invention concerne le secteur technique de la synthèse et des applications de polyvinylaminee (PVA) en poudres.
En particulier, l'invention concerne les applications de ces PVA dans la fabrication du papier et notamment pour l'obtention de feuilles de papier ou carton présentant un ensemble de propriétés intéressantes.
L'invention concerne également l'application des PVA dans l'industrie du traitement des eaux, et des activités pétrolières et para-pétrolières.
L'invention concerne également toutes les applications connues des floculants et des coagulants.

<u>Art antérieur général:</u>

Lors de la fabrication du papier, du carton ou analogue, ou dans la préparation de fluides à usage pétroller ou para-pétrolier, ou dans le traitement des eaux résiduaires, notamment des eaux de rejet dites "municipales ", qui contiennent les résidus urbains, II est bien connu d'utiliser des agents floculants et/ou coagulants, notamment des agents de rétention de type polymère dont la fonction est de retenir un maximum de fines et de charges dans une feuille de papier, ou encore des agents de floculation / coagulation dont la fonction sera de floculer les résidus en suspension dans des eaux résiduaires, etc.....
Dans le domaine papetier, les effets bénéfiques qui découlent de l'utilisation d'un agent de rétention sont essentiellement :

- l'augmentation de la production et la diminution des coûte de fabrication : économie énergétique, marche plus régulière de la machine, rendement plus élevé en fibres, fines, charges et de produits d'ennoblissement anioniques, plus faible acidité dans le circuit liée à une diminution de l'utilisation de sulfate d'alumine et donc amoindrissement des problèmes de corrosion ;

- l'amélioration de la qualité : meilleure formation et meilleur épair ; amélioration du taux d'humidité de la feuille, de l'opacité, du lisse, du pouvoir absorbant et diminution de la porosité du papier.

On a introduit des polymères comme floculants voici une quarantaine d'années, avec des poids moléculaires qui étalent alors relativement faibles. Le brevet des Etats Unis d'Amérique n° 3 235 490 (Goren) décrit divers polymères en gels.
On pouvait utiliser certains des polymères de Goren comme coagulants, et notamment pour coaguler des matières solides très fines en suspension.
Depuis longtemps, on a proposé d'ajouter à la pâte de la bentonite, celle-ci pouvant être éventuellement additionnée à d'autres produits minéraux, tels que des sulfates d'aluminium, voire des polymères synthétiques, notamment du polyéthylène-imine (voir par exemple documents DE-A-2 262 906 et US-A-2 368 635).
Dans le document US-A-3 052 595, on a proposé d'associer de la bentonite à un polyacrylamide de caractéristique linéaire essentielle. Ce procédé s'est trouvé en concurrence avec des systèmes plus faciles à mettre en oeuvre tout en étant aussi performants. En outre, même avec les polyacrylamides linéaires actuels, le pouvoir de rétention reste encore insuffisant.
Dans le document EP-A-0 017 353, on a proposé, pour la rétention des pâtes peu chargées (au plus 5 % de charges) d'associer à la bentonite un copolyacrylamide linéaire non ionique à faiblement anionique. Ce procédé ne s'est guère développé, car ces polymères sont relativement peu performants en matière de rétention, notamment de pâtes chargées, sans doute par suite d'une synergie insuffisante entre ces copolymères et la bentonite qui a peu tendance à recoaguler.
Dans le document EP-A-0 235 893, on a proposé de faire appel à des polyacrylamides cationiques de poids moléculaire supérieur à un million, de trente millions et plus, essentiellement linéaires. On obtient de la sorte un effet de rétention certes satisfaisant, mais encore jugé Insuffisant dans l'application papetière, car, l'utilisation de bentonite entraînant des difficultés lors du traitement ultérieur des effluents en sortie de machine, les utilisateurs ne sélectionnent ce système qu'en cas d'avantages significatifs.
Dans les notes présentées à l'occasion de cours à Seattle, 11-13 octobre 1989, et publiées sous le titre "Supercoagulation in the control of wet end chemistry by synthetic polymer and activated bentonite", R. Kajasvirta a décrit le mécanisme de la supercoagulation de la bentonite activée en présence d'un copolyacrylamide cationique, sans en préciser la nature exacte. Ce procédé présente les mêmes inconvénients que précédemment.
Enfin, le EP 0 574 335 a réalisé un perfectionnement important en proposant l'emploi de polymères (notamment

pofyacrylamides) ramifiés sous la forme d'une poudre.
On connaît également dans l'art antérieur des systèmes d'agents de rétention pour la fabrication d'une feuille de papier, carton ou analogue, qui consistent en une combinaison de deux agents de rétention, généralement un agent de rétention principal et un agent de rétention secondaire. Il s'agit alors d'un système qualifié de " dual ".

Dans le brevet USP 4,753,710, on préconise ainsi l'emploi d'un polymère acrylique linéaire de haut poids moléculaire comme agent de rétention principal, qui est ajouté à la masse fibreuse, puis un cisaillement notamment dans la pompe de mélange ou "fan pump", puis un ajout de bentonite (qui est une argile gonflante) comme agent de rétention secondaire.

Dans le secteur du traitement des eaux résiduaires, on connaît par exemple les brevets EP 0 202 780 ou EP 0 201 237 dont les enseignements se recouvrent. Dans cette Industrie, on recherche la clarté de l'eau, qui est un impératif pour la satisfaction du Client, mais aussi la plus grande siccité possible du résidu obtenu et séparé, car chaque fraction même minime gagnée en siccité correspond à des économies énormes de transport des résidus, en raison de la quantité moindre d'eau à transporter.

On connaît entre autres polymères la polyéthylènelmine ou PEI, qui est l'un des floculants cationiques synthétiques les plus anciens. La PEI est souvent utilisée pour traiter les effluents industriels ou municipaux, mais surtout en agent d'égouttage et de rétention dans l'industrie du papier (la référence étant la " polymin SK "(TM)).

On a également proposé dans l'art antérieur l'emploi de PVA ou polyvinylamine notamment dans le domaine papetier. On sait que l'on forme avec la PVA une structure de flocs à la fois très solide et de petites dimensions, comportant peu d'eau liée.

Dans le brevet BASF DE 44 09 903, on décrit un procédé de synthèse de PVA qui est mis en oeuvre à environ 40 °C et qui donne un gel que l'on disperse ensuite dans le méthanol. Le système de polymérisation emploie un catalyseur azoïque pur, et selon la technique décrite, un système redox ne fonctionne pas. Le procédé est de plus très lourd et très complexe.

Dans le brevet Mitsubishi JP 07 118 333 on effectue une polymérisation par précipitation à partir d'une solution dans un solvant de type méthanol. Le procédé est lourd et complexe du fait de contraintes liées à l'utilisation et à la recirculation de solvant.

Dans le brevet Mitsubishi GB 2 308 123, on déploie un procédé complexe de précipitation par le PEG (polyéthylèneglycol) et d'hydrolyse de la solution obtenue à partir du produit résultant.

Ces deux brevets utilisent des azoïques purs.

On connaît encore le brevet Mitsui JP 0 628 7232 qui emploie également un catalyseur azoïque.

Un brevet BETZ Canada 2110366 décrit uniquement une polymérisation en solution avec un système azoïque pur et une application comme coagulant.

D'autres documents (entre autres, GRACE) décrivent une application papetière de bentonite combinée à une PVA et à un polyacrylamide.

Un brevet BETZ USP 5, 292,441 décrit un procédé de quatemisation de la PVA.

Le brevet BASF USP 5,290,880 décrit une synthèse de la PVA qui utilise une initiation de la polymérisation à 25 - 80 °C par un système complexe redox combiné à un catalyseur azoïque, avec des contraintes mécaniques lourdes, comme des contraintes de mélange avec une prépolymérisation. Les exemples comportent tous une initiation qui est seulement menée avec un azoïque pur, et à une température de l'ordre de 60 °C. On conduit selon ce document la polymérisation à une température qui peut atteindre 150°C.

Ce brevet est à rapprocher du brevet USP 4,808,683 qui effectue une polymérisation à des températures comprises entre 30 et 100 °C, avec des exemples autour de 60 °C, ou encore du brevet USP 4,421,602 qui effectue la polymérisation à l'aide d'un système Initiateur complexe redox combiné à un azoïque, qui enseigne des températures de polymérisation de 30 à 140 °C avec des exemples à 40, 50 et 60 °C.

On connaît encore le brevet EP 0 220 603 où la synthèse de la PVA est effectuée dans le CO2 supercritique.

Comme on le voit, de nombreuses tentatives visant à employer le PVA ont été effectuées par de nombreux groupes Industriels, mais l'emploi du PVA s'est heurté jusqu'à ce jour à l'obligation de recourir à des procédés de synthèse complexes, comportant de nombreuses étapes et de nombreux produits intermédiaires, utilisant des effets de pression, température, vide, ou des opérations de mélange, présence de solvants, etc...., et donc coûteux, conduisant à une ingénierie complexe donc d'application coûteuse et malaisée, et posant de plus des problèmes de respect de l'environnement comme par exemple par remploi de solvants.

Les PVA obtenues sont donc d'application industrielle soit malaisée soit coûteuse soit complexe, soit tous ces inconvénients ensemble.

Or la PVA reste néanmoins un produit très intéressant du fait de sa forte capacité de coagulation voire de floculation.

RESUME DE L'INVENTION

Il existe donc un besoin bien Identifié depuis longtemps par de grands groupes industriels, mais non résolu, visant à disposer d'une PVA en poudre pouvant être produite facilement, de manière aussi directe que possible industriellement, par un procédé simple, en respectant les normes actuelles de respect de l'environnement, à un coût réduit, et pouvant être utilisée facilement dans les industries précitées. Serait notamment particulièrement apprécié un procédé simple fonctionnant sous pression atmosphérique et à basse température, pour des raisons évidentes.

Par ailleurs, on a toujours cherché à travailler à basse température, sans y parvenir, pour des raisons autres qu'économiques, notamment en raison de la faible réactivité du monomère NVF (N-vinylformamide), et aussi car l'homme de métier sait que, si la polymérisation est initiée et conduite à basse température, le poids moléculaire de la PVA obtenue sera plus élevé, du fait d'un meilleur contrôle de la cinétique de polymérisation, ce qui est un besoin reconnu dans ces industries.

Il est naturellement essentiel que ces améliorations ne se réalisent pas au détriment des propriétés de l'agent et des applications envisagées de floculation et/ou coagulation, dont on a rappelé ci-dessus la complexité et le caractère souvent antagoniste, bien connu de l'homme du métier.

Un objet de l'invention est donc de développer un tel procédé simple, direct, peu coûteux, et conduisant directement à un produit PVA en poudre utilisable dans un processus d'application simple et direct, malgré la faible réactivité connue et dissuasive du NVF.

Selon la présente Invention, on utilise comme agent de coagulation floculation, destiné à améliorer nettement la rétention, la formation, l'égouttage, et d'autres propriétés de la feuille de papier ou carton ainsi obtenue, ou la floculation / coagulation de courants d'effluents industriels ou municipaux, et de manière générale d'eaux résiduaires, un polymère de type PVA (polyvinylamine) en poudre obtenu par un procédé de synthèse spécial.

Le PVA peut être obtenu soit comme agent unique, soit en mélange avec d'autres agents connus de floculation/ coagulation.

L'invention concerne un procédé de synthèse à basse température et sous pression normale ou atmosphérique des polymères de type PVA (polyvinylamine) en poudre, à partir du monomère N-vinylformamide.

Par "polymères", on désigne ici et dans toute la demande de brevet aussi bien les homopolymères que les copolymères avec des monomères copolymérisables avec le N-vinylformamide, comme, à titre non limitatif, l'acrylamide, ou dérivés substitués de l'acrylamide, l'acide (méth)acrylique, les (méth)acrylates, les esters de (méth)acrylatas, les monomères connus sous les abréviations de APTAC, MAPTAC, AMPS, le N-vinylacétate, l'acrylonitrile, le DADMAC.
Note: APTAC = acrylamidopropyltrimethylammonium (chlorure)
MAPTAC = meth (APTAC)
DADMAC = diallyldiméthylammonium (chlorure)

La polymérisation selon l'invention est une polymérisation en masse, en milieu aqueux ou dans l'eau, qui démarre à une température de -2˚C à + 10˚C, est initiée par une combinaison originale de catalyseur redox et azoïque (s), se déroule ensuite à moins de 100 ˚C, et est effectuée sous pression sensiblement normale ou même de préférence atmosphérique.

La polymérisation est menée dans l'eau et conduit à un gel de polymère PVA non ionique.

Elle est suivie d'une hydrolyse directe sur le gel obtenu en sortie de polymérisation, pour obtenir un polymère PVA cationique, que l'on soumet à une étape de séchage standard, par exemple en lit fluidisé ou dans un four à rotor.

On obtient ainsi directement un PVA cationique sec en poudre, de haut poids moléculaire, directement applicable dans l'Industrie, et qui présente des applications très intéressantes dans les industries précitées.

On peut utiliser la poudre telle quelle, ou bien la dissoudre dans un milieux aqueux comme l'eau, et utiliser l'agent selon l'invention seul ou bien en combinaison avec d'autres poudres et/ou d'autres solutions d'agents floculants et/ou coagulants connus, sous une forme physique compatible.

Dans l'art antérieur rappelé oi-dessus, les polymérisations étaient toujours effectuées à température très largement supérieures à 0 ˚C et même largement supérieures à la température ambiante, comme 50, 60, 70 ˚C, 100 ˚C. Le plus souvent, la polymérisation était effectuée également sous pression. Même le brevet BASF USP 5.290,880 qui représente selon l'opinion du Demandeur l'art antérieur le plus proche, en ce sens qu'il décrit une combinaison d'initiateur azoïque et redox, mais en n'exemplifiant dans ses dix exemples qu'un azoïque pur, l'azobisamidopropane dichlorhydrate (ce qui écarte en fait l'homme de métier de la solution redox/azoïque), est contraint d'initier la polymérisation entre 25 et 80 ˚ C, notamment autour de 60˚C dans les exemples, et à conduire la polymérisation à haute température, de l'ordre de 150 ˚C.

Par ailleurs, dans l'art antérieur cité, on ne parvenait à obtenir que des PVA sous forme liquide ou d'émulsion ou de produit reprecipité ou séché par séchage par pulvérisation ou " spray-drying ", qui présentaient les inconvénients bien connus, comme l'obligation de transporter de grandes quantités d'eau et solvant, l'obligation d'Inverser l'émulsion sur le site d'emploi, et analogues. Au mieux, on pouvait précipiter une poudre à l'acétone à partir du PVA en émulsion, mais ceci représente une étape supplémentaire, donc un surcoût industriel important, et emploie de l'acétone, solvant

dangereux qu'il est nécessaire de recycler, avec encore un surcoût important.

Au contraire, selon l'invention, on obtient directement une poudre sèche directement utilisable, qui présente un fort intérêt dans les industries considérées.

## DESCRIPTION DETAILLEE DE L'INVENTION

Selon le meilleur mode de réalisation, le système redox utilisé pour la polymérisation est constitué par la combinaison de tertiobutyle hydroperoxyde ou TBHP et de métabisulfite de sodium.

D'autres systèmes redox utilisables moins préférentiellement sont les suivants:

oxydants: hydroperoxydes, comme hydroperoxyde de cumène, eau oxygénée, ou persulfates, etc..... bien connus;

réducteurs: NaFS ou formaldéhyde-sulfoxylate de sodium, sels de sulfites et bisulfites, SO2, etc.... bien connus.

Selon le meilleur mode de réalisation, l'initiateur azoïque utilisé est le AZDN (azobisisobutyronitrile)

D'autres catalyseurs azoïques utilisables moins préférentiellement sont les produits identifiés dans le Tableau A ci-après.

De manière tout à fait préférée, on utilisera le système initiateur suivant:

combinaison de tertiobutyle hydroperoxyde ou TBHP et de métabisulfite de sodium dans le rapport de 1/0.5 à 1/3, de préférence dans le rapport 1/2 à 1 /1.

Le procédé de synthèse en "poudre" à:

a)- polymériser dans l'eau, un milieu aqueux ou en masse, le monomère vinylformamide à très basse température, c'est à dire à une température d'initiation de la polymérisation voisine de 0˚C et à une température de fin de polymérisation qui reste inférieure à 100 - 105 ˚C, de préférence inférieure ou égale à 100 ˚C, sous une pression sensiblement normale, notamment atmosphérique, en présence d'un initiateur de polymérisation comprenant au moins une combinaison de système redox et d'initiateur de type azoïque,

b)- obtenir ainsi un gel de polymère PVA non ionique (que l'on n'isole pas obligatoirement)

c)- broyer le gel ainsi obtenu par des moyens mécaniques connus comme une vis sans fin ou, en laboratoire, un hacheur ménager du type Moulinex (TM) ou analogue.

d)- hydrolyser le gel obtenu.

La température d'initiation de la polymérisation est comprise entre -2 et + 10˚C, notamment de l'ordre de - 2 ˚C, 0˚C ou + 2˚C, et peut être éventuellement supérieure, sans toutefois dépasser + 5 ˚C à + 10 ˚C, les avantages de l'invention étant pour l'essentiels perdus au delà de cette température, notamment l'obtention de hauts poids moléculaires.

La polymérisation présente le grand avantage d'être effectuée sans solvant.

Par "sensiblement sous pression normale ", on désigne le fait que l'on n'opère pas délibérément sous pression. On utilisera typiquement la pression atmosphérique.

On effectue de préférence l'hydrolyse sur le gel broyé, dans un procédé en continu ou semi-continu qui représente l'un des avantages de l'invention.

L'hydrolyse est effectuée sur le gel, qui contient de 30 à 60 % d'eau environ, de préférence autour de 50 % d'eau.

L'hydrolyse est effectuée en milieu acide ou basique OH(-) ou H(+), notamment en utilisant comme agent d'hydrolyse la soude NaOH ou l'acide phosphorique $H_3PO_4$.

On effectue l'hydrolyse sur le gel en fin de polymérisation (température du gel environ 90 - 95 ˚C), ce qui dispense d'ajouter une étape supplémentaire spécifique de chauffage pour réaliser d'hydrolyse.

On obtient des grains de PVA cationique partiellement hydrolysé en fonctions amine.

Le taux d'hydrolyse sera selon l'Invention compris entre 20 et 70 %, de préférence 45 et 60 %, de préférence autour de 40 % de fonctions amine. Celui-ci dépendra de l'application envisagée.

L'invention concerne le procédé générât de synthèse du polymère PVA polyvinylamine caractérisé en ce qu'il comprend l'initiation de la polymérisation du N-vinylformamide à basse température, de l'ordre de -2 à + 2 ou 5 - 10 ˚C en option poudre, à l'aide d'une combinaison Initiatrice de système redox et de catalyseur(s) azoïque(s).

L'invention concerne plus précisément les procédés qui viennent d'être décrits, et leurs modes de réalisation

et variantes.

L'invention concerne encore la préparation du polymère polyvinylamine PVA obtenu en gel par ces procédés.

L'invention concerne encore la préparation du polymère polyvinylamine PVA hydrolysé ou partiellement hydrolysé obtenu par hydrolyse dudit gel obtenu par ces procédés, respectivement en grains ou poudre sèche.

On peut donc obtenir selon l'invention une poudre de PVA que l'on peut combiner avec une autre poudre d'un autre agent de haut poids moléculaire (ou plusieurs).

A titre de variante, on peut combiner les solutions ou dispersions correspondantes, obtenues à partir desdites poudres,

L'invention concerne encore la préparation du polymère polyvinylamine PVA sous la forme d'une solution dans l'eau ou dans un milieu aqueux du PVA hydrolysé ou partiellement hydrolysé obtenu en poudre par le procédé décrit ci-dessus.

L'invention concerne encore la préparation du gel intermédiaire obtenu à la fin de la polymérisation selon l'invention, c'est à dire avant hydrolyse, et leur synthèse. De tels produits intermédiaires sont utiles dans l'industrie.

L'invention concerne aussi la préparation de compositions pour tous usages industriels, notamment comme agents floculants ou coagulants, caractérisées en ce qu'elles comprennent au moins un PVA obtenu en poudre ou sous forme de solution de ladite poudre dans l'eau ou un milieu aqueux.

L'invention concerne encore la préparation de compositions pour usage papetier, notamment comme agents floculants ou coagulants et de rétention de charge, caractérisées en ce qu'elles comprennent au moins un PVA obtenu sous forme de poudre, de solution de ladite poudre dans l'eau ou un milieu aqueux.

L'invention concerne encore la préparation de compositions pour traitement des eaux résiduaires, notamment comme agents de floculation et/ou coagulation, caractérisées en ce qu'elles comprennent au moins un PVA obtenu sous forme de poudre, de solution de ladite poudre dans l'eau ou un milieu aqueux.

L'invention concerne encore la préparation de compositions pour applications pétrolières et parapétrolières, caractérisées en ce qu'elles comprennent au moins un PVA obtenu sous forme de poudre, de solution de ladite poudre dans l'eau ou un milieu aqueux.

L'invention concerne également la préparation des compositions ci-dessus dans lesquelles au moins un PVA en poudre préparé selon l'invention est combiné ou assocéé à au moins un autre agent floculant et/ou coagulant de haut poids moléculaire, et éventuellement à d'autres additifs connus.

D'autres caractéristiques et avantages de l'invention apparaîtront mieux à la lecture de la description qui va suivre, et en se référant au dessin annexé, sur lequel;

- la figure 1 représente la variation de la cationicité du PVA en poudre en fonction du nombre de moles de NaOH ou de H3PO4 employé pour l'hydrolyse;

- la figure 2 représente la corrélation entre la cationicité du PVA (en poudre) et le taux de rétention de charges.

Les exemples suivants illustrent l'invention sans toutefois en limiter la portée.

**Exemple de formulation poudre de PN-vinyl-formamide**

I - Polymères divers

a) - Charge de 1500 g :

- NVFA monomère N - vinylformamide (VINAMER (TM)) = 660 g pur
- $H_2O$ : 840 g
- Acétate de sodium (sel) : 0,1 % (par rapport à la charge) : 1,5 g
- $H_3PO_4$ 40 % : quantité nécessaire pour obtenir un pH de 6,00

b) - Catalyse :

| ESSAI N° 1 | ESSAI N° 2 | ESSAI N° 3 | |
|---|---|---|---|
| 100 | 100 | 75 | ppm VA 0 44/ charge |
| 0 | 0 | 0 | ppm V 50 / charge |
| 1000 | 1000 | 700 | ppm AZDN / charge |

(suite)

| ESSAI N° 1 | ESSAI N° 2 | ESSAI N° 3 | |
|---|---|---|---|
| 200 | 150 | 100 | ppm TBHP / charge |
| 250 | 150 | 75 | ppm MBS / charge |
| 1 h 25 | 1 h 40 | 2 h 00 | cinétique |

c) température initiale: 0°C

■ température finale; 100-102°C
pH = 5 - 6

II - Hydrolyse du gel

a) Le gel est broyé en particules grossières (quantité 100 g)

b) Durant la phase de broyage introduction d'une fraction de soude 50 % correspondante à 0,076 mole.

c) La réaction dégage un peu de chaleur.

d) Le gel est placé en sac de polypropylène puis scellé.

e) L'ensemble est placé en étuve à température constante de 80°C pendant 1 heure.

f) Au bout d'une heure, le gel est rebroyé puis 0,076 mole de soude sont rajoutés. Cette séquence est suivie d'un séjour en sac et dans l'étuve pendant 1 heure.

g) Cette opération est réitérée jusqu'à ce que le nombre de mole de soude (ou agent d'hydrolyse) ajouté corresponde au taux d'hydrolyse recherché en limitant le nombre de fractions d'agent d'hydrolyse à 4. Cf. figure 1.

i) On obtient alors un gel que l'on peut sécher d'une manière conventionnelle sur le sécheur à lit fluidisé.

j) Les phases d'hydrolyse peuvent également être effectuées en milieu acide avec des acides conventionnels tels HCl, $H_3PO_4$, $HNO_3$.

III - Comparatif de l'hydrolyse acide par rapport à l'hydrolyse alcaline.

La figure 1 montre les variations de cationicité observées en fonction du nombre de mole de soude ou d'acide phosphorique rajouté sur 0,634 mole de polyvinylformamide.

Le graphe montre que l'hydrolyse alcaline suit plus un profil stoéchiométrique que l'hydrolyse acide.

IV - Caractéristiques du produit final

On obtient des produits solubles de haut poids moléculaire et de cationicité variant de 0 à 50 moles % voir 100 moles % théorique, et dont les viscosités UL sont les suivantes:

| ESSAI N° 1 | ESSAI N° 2 | ESSAI N° 3 |
|---|---|---|
| 2,2 cPs | 2,6 cPs | 3,1 cPs |

(mesure de la viscosité à 1 g de polymère actif / litre dans une solution NaCl 1 molaire, à 25 °C, 60 tr/min., UL adaptateur)

**Exemple de copolymérisation VF (vlnylformamide)/DADMAC et VF/Acrylamide.**

**Charge de 1500g**

| | | ESSAI 7 | ESSAI 8 |
|---|---|---|---|
| a) | NVF | 645,8g | 450 |
| | Acrylamide (50) | 0 | 100 |
| | DADMAC (62) | 125,0g | 0 |
| | EAU | 727,5g | 948,5 |
| | $H_3PO_4$ (40%) | pour ajustement de pHi | |
| | Acétate de Nq | 1,5g | |
| b) | Catalyse | | |
| | VAO44 ppm/charge | 100 | 50 |
| | V50 ppm/charge | 0 | 0 |
| | AZDN ppm/charge | 100,0 | 1000 |
| | TBHP ppm/charge | 100 | 100 |
| | MBS ppm/charge | 100 | 100 |
| | Cinétique | 2h00 | 1h20 |
| c) | Conditions opératoires | | |
| | Température Initiale 0˚c | | |
| | Température finale 100˚c | | |
| | PH 5-6 | | |
| d) | Viscosités UL (cPs) | 2,5 | 3,4 |

**Exemple de performance des polyvinylamines poudres en applications papier**

L'objectif est de comparer les PVA obtenues selon l'invention avec le produit PEI (polyéthylène imine) "Polymin SK " (TM) qul est largement utilisé par l'homme de métier.

On se référera au Tableau B ci après qui concerne l'essai n˚ 2 défini plus haut, avec un taux d'hydrolyse de 27 %.

On compare l'essai 14 par rapport à essai 15, et respectivement l'essai 28 à l'essai 29, à un autre dosage.

A faible et fort dosages, on obtient de meilleures rétentions de charges et de FPR, représentant une amélioration de 20 % par rapport à la PEI.

A faible dosage, la PVA est largement supérieure à la PEI en termes de turbidités 30' en 1ère et 3ème passes, ce qui indique une meilleure coagulation des éléments colloïdaux, et on observe également une meilleure clarté des eaux sous toile.

On note encore un avantage à tous les dosages de la PVA par rapport à la PEI, en termes de rétention totale.

On se reportera ensuite au Tableau C, qui correspond à l'essai n˚ 1 ci dessus, avec un taux d'hydrolyse variable de 4, 8, 15, 25 et 32 %.

La figure 2 correspond au Tableau C: pour la même PVF (polyvinylformamide) à différents % d'hydrolyse, la rétention augmente sensiblement proportionnellement au taux d'hydrolyse de la PVA. A 32 % d'hydrolyse, on note une amélioration de l'ordre de 30 % par rapport à la PEI.

Le Tableau C Indique que la clarté des eaux sous toile est meilleure avec la PVA qu'avec la PEI, en turbidité 1 ère, 2 ème ou 3 ème passe, et les valeurs de rétention sont bien meilleures avec la PVA.

On a testé le plus faible poids moléculaire des trois essais. Avec les poids moléculaires plus élevés, les résultats seraient encore meilleurs.

Les produits selon l'invention sont supérieurs, en rétention de charge, à la PEI " Polymin SK" (TM) qui est l'une des références de l'homme du métier en la matière.

Les abréviations ont les significations suivantes:

KF pâte de kraft feuilllus

KR pâte de kraft résineux

PM pâte mécanique

GCC CaCO3 broyé (ground calcium carbonate)

CSF Canadian Standard Freeness (essai d'égouttage)

A.Rét. agent de rétention

Cha MP Charge minérale

Turb. turbidité

MES matières en suspension

Pds poids de la feuille à la première passe

Feuille poids de la feuille

X à la première passe

R2 à la deuxième recirculation des eaux blanches = à la troisième passe

Ash cendres

**Exemple de performance des polyvinylamines poudres en applications traitement des eaux résiduaires**

**AJOUT D'UNE PVA EN VUE D'UNE AMÉLIORATION DE LA PERFORMANCE D'UN FLOCULANT**

Objectifs :

L'objectif est l'amélioration d'un floculant par ajout d'une PVA au floculant standard FO 4698 , sur la déshydratation de boues (filtration, centrifugation).

Nature de l'éffluent;

Boues mixtes sortie-épaississeur de la STEP (Station d'épuration municipale) de Saint-Etlenne (France).
MS : 42,8 g/l.
pH initial = 6,5

Résultats :

Volume d'échantillon traité : 200 ml

Méthode : test d'égouttage sur buchner + siccité à 5 bars.

Les opérations et résultats sont rassemblés dans le Tableau D ci-dessous.

**Tableau D**

| PVA | ratio de mélange PVA/PAA ppm | Polymère (**) PAA | dosage total flocul. ppm | (n) | Vol. filtrat(ml) 5" | 10" | 15" | 30" | 1' | Siccité (%) | Clarté NTU |
|---|---|---|---|---|---|---|---|---|---|---|---|
| essai n°1 hydrolysé à 32% | 1/99 | FO 4696 | 202 | 20 | 36 | 48 | 48 | 72 | 63 | 18.9 | 101 |
| idem | 5/95 | FO 4698 | 210 | 20 | 40 | 48 | 58 | 72 | 90 | 21.6 | 82 |
| idem | 7,5/92,5 | FO 4698 | 215 | 20 | 40 | 46 | 60 | 74 | 78 | 21.4 | 74 |
| idem | 10/90 | FO 4698 | 220 | 20 | 40 | 48 | 58 | 74 | 86 | 18.8 | 74 |
| essai n°3 hydrolysé à 40% | 1/99 | FO 4698 | 202 | 20 | 40 | 50 | 80 | 76 | 88 | 19.1 | 100 |
| idem | 5/95 | FO 4698 | 210 | 20 | 42 | 52 | 60 | 72 | 88 | 21.2 | 80 |
| idem | 7,5/92,5 | FO 4698 | 215 | 20 | 38 | 48 | 56 | 70 | 90 | 21.5 | 74 |
| idem | 10/90 | FO 4698 | 220 | 20 | 40 | 48 | 54 | 72 | 88 | 20.2 | 72 |
| | 0 | FO 4698 | 202 | 20 | 38 | 48 | 54 | 70 | 88 | 18.3 | 125 |
| | 0 | FO 4698 | 220 | 20 | 40 | 50 | 60 | 72 | 88 | 18.5 | 110 |

Notes pour le Tableau D:
(**) Polyacrylamide de haut poids moléculaire.
NTU = unités standard de turbidité.
(n) = nombre de transvasements.

Conclusion

L'ajout d'une PVA ne semble pas procurer un égouttage plus rapide. En revanche le gain de siccité est net lors du rajout de 5 ou 7,5 % de PVA. De plus, les filtrats sont d'une qualité bien supérieure dès les plus faibles doses de PVA. On passe de 125 à 74 unités NTU, soit une amélioration de l'ordre de 60%.

Les deux derniers essais montrent qu'un surdosage du floculant seul ne permet pas de retrouver l'effet apporté par le PVA.

AJOUT D'UNE PVA EN VUE D'UNE AMÉLIORATION DE LA PERFORMANCE D'UN FLOCULANT

Objectifs :

Amélioration d'un floculant par ajout d'une PVA à un floculant standard FO 4698, sur la déshydratation (filtration, centrifugation).

Nature de l'effluent :

Boues d'aération prolongée sortie-épaississeur de la STEP (Station d'épuration municipale) de Andrézieux (France).
MS : 24,1 g/l.
pH initial = 6,8

Résultats :

Volume d'échantillon traité : 200 ml

Méthode : test d'égouttage sur buchner + siccité à 5 bars.

Les opérations et résultats sont rassemblés dans le **Tableau E** cl-dessous.

**Tableau E**

| PVA | ratio de mélange PVA/PAA | Polymère (**) PAA | dosage total flocul. | | Vol. filtrat (ml) | | | | | Siccité | Clarté |
|---|---|---|---|---|---|---|---|---|---|---|---|
| | ppm | | ppm | (n) | 5" | 10" | 15' | 30" | 1' | (%) | NTU |
| essai n°1 hydrolysé à 40% | 1199 | FO 4698 | 202 | 11 | 90 | 108 | 116 | 124 | 132 | 13,6 | 86 |
| idem | 5/95 | FO 4698 | 210 | 11 | 92 | 110 | 116 | 128 | 134 | 14,4 | 70 |
| idem | 7,5/92,5 | FO 4698 | 215 | 11 | 90 | 110 | 114 | 124 | 132 | 16,2 | 68 |
| idem | 10/90 | FO 4698 | 220 | 11 | 92 | 112 | 116 | 128 | 134 | 15,6 | 64 |
| idem | 1/99 | FO 4698 | 202 | 11 | 90 | 109 | 114 | 126 | 132 | 13,7 | 88 |
| idem | 5/95 | FO 4898 | 210 | 11 | 92 | 110 | 116 | 126 | 132 | 14,3 | 72 |
| idem | 7,5/92,5 | FO 4698 | 215 | 11 | 90 | 112 | 118 | 124 | 132 | 15,3 | 68 |
| idem | 10/90 | FO 4698 | 220 | 11 | 92 | 110 | 114 | 126 | 134 | 15,5 | 66 |
| | 0 | FO 4698 | 202 | 11 | 90 | 108 | 116 | 126 | 132 | 13,4 | 102 |
| | 0 | FO 4698 | 220 | 11 | 94 | 112 | 116 | 128 | 136 | 13,6 | 90 |
| essai n°7 hydrolysé à 30% | 7.5/92,5 | FO4698 | 215 | 11 | 91 | 110 | 116 | 125 | 134 | 15,5 | 61 |

(**) Polyacrylamide de haut poids moléculaire:
NTU = unités standard de turbidité.
(n) = nombre de transvasements.

**AJOUT D'UN COAGULANT ORGANIQUE EN VUE D'UNE AMÉLIORATION DE LA PERFORMANCE D'UN FLOCULANT**

Objectifs :

Tester une nouvelle famille de floculant pour la déshydratation (filtration, centrifugation) : augmenter la siccité finale et la clarté des filtrats.

Nature de l'effluent :

Boues mixtes sortie-épaississeur de la STEP de Saint-Etienne
MS : 42,6 g/l.
pH Initial = 6,5

Résultats ;

Volume d'échantillon traité : 200 ml

Méthode : test d'égouttage sur buchner + siccité à 5 bars.

Les résultats sont rassemblés dans le Tableau F ci-dessous.

**Tableau F**

| Polymère | dosage ppm | (n) | Vol. fíltrat (ml) 5" | 10" | 15" | 30" | 1' | Siccité (%) | Clarté NTU |
|---|---|---|---|---|---|---|---|---|---|
| PVA émulsion essai n° 2 | 220 | 20 | 40 | 50 | 56 | 72 | 88 | 19.5 | 80 |
| PVA poudre essai n° 3 | 220 | 20 | 38 | 48 | 54 | 70 | 88 | 19.4 | 82 |
| FO 4898 | 220 | 20 | 40 | 50 | 60 | 72 | 88 | 18.5 | 110 |
| (n) = nombra de transvasements. | | | | | | | | | |

Conclusion

Ces nouveaux floculants ne semblent pas procurer un égouttage plus rapide. En revanche le gain de siccité est net pour tes deux PVA. De plus, les filtrats sont d'une qualité supérieure.

Conclusion Générale

L'ajout d'une PVA ne Semble pas procurer un égouttage plus rapide. En revanche le gain de siccité est net lors du rajout de 5 ou 7,5% de PVA . On observe une amélioration de la clarté et de trois points de siccité par rapport au floculant au même dosage. De plus, les filtrats sont d'une qualité bien supérieure dès les plus faibles ajouts de PVA.
L'amélioration en turbidité est de l'ordre de 30% et de deux points en siccité. Par ailleurs, on notera l'avantage certain des performances du copolymère NF/DADDAC hydrolysé à 30% en terme de turbidité (NTU :61)
L'invention concerne encore le gel intermédiaire obtenu à la fin de la polymérisation selon l'invention, c'est à dire avant hydrolyse, et leur synthèse. De tels produits intermédiaires sont utiles dans l'industrie, pour réaliser plusieurs produits de taux d'hydrolyse différents, à partir d'une même charge de polymérisation.
L'invention concerne encore le produits papetiers, notamment feuilles, caractérisés en ce qu'ils contiennent ou ont été traités par un agent PVA en poudre ou une composition de PVA en poudre selon l'invention, les produits et fluides pétroliers ou parapétroliers, caractérisés en ce qu'ils contiennent ou ont été traités par un agent PVA en poudre ou une composition de PVA en poudre selon l'invention, et les eaux résiduaires et effluents Industriels, caractérisés en ce qu'ils contiennent ou ont été traités par un agent PVA en poudre ou une composition de PVA en poudre selon l'invention, ainsi que les systèmes d'initiation azoïque(s) et redox utilisés selon l'invention pour produire une PVA en poudre à basse température, tels que décrits ci-dessus, et leur emploi dans ce but.

*On trouvera cl-dessous les protocoles utilisés pour les mesures et essais.*

***A. PAPIER***

**PRÉPARATION DU MÉLANGE PÂTE CHIMIQUE ET MECANIQUE**

1) Composition et procédure de désintégration :

Mélange de CDRA kraft de feuillus (70 %), de CDRA kraft de résineux (10 %) et de pâte mécanique de pln scandinave (20 %).
On pèse exactement :

22,34 g de kraft de feuillus CDRA à 94,0 % de siccité

3,20 g de kraft de résineux CDRA à 93,7 % de siccité

6,52 g de pâte mécanique de pin scandinave à 92,0 % de siccité.

On déchiquète les morceaux de pâtes vierges dans le bol de mixage du Waring, on rajoute exactement 800 ml d'eau normale à une température proche de 20°C.
On mixe le mélange pendant 2' sur la position haute vitesse du blender.
Une fois le blender arrêté, la consistance de la pâte est ramenée à 1,5 % à la fin en rajoutant 1200 ml d'eau,

elle est alors prête à être désintégrée dans le Mark III D avec 20 % de GCC (cf. procédure de Thickstock).

On obtient une pâte ayant un CSF de 365 ml ± 35.

2) Pour une utilisation à longue durée (maximum 1 mois) :

Il suffit alors de la filtrer sur büchner afin de pouvoir augmenter sa consistance et la placer à 4˚C dans le réfrigérateur.

**PARAMÈTRES FORMETTE**

1) Standard utilisé :

T1 = 40 s agitation à la vitesse sélectionnée sur le bloc moteur (800 rpm) pendant 40 s.

T2 = 1s mise en marche d'un accessoire 1 par commande interne.

T3 = 2,2 s arrêt de l'accessoire 1.

T4 = 10s mise en marche d'un accessoire 2 par commande interne.

T5 = 2s arrêt de l'accessoire 2.

T6 = 21,1 s mise en marche d'un accessoire 3 par commande interne.

T7 = 3,3 s arrêt de l'accessoire 3.

T8 = 4s temps mort.

T9 = 3s temps d'ouverture du clapet conique.

T10 = 0,1s temps mort.

T11 = 0,6s bullage d'air au dessus de la grille.

T12 = 2s temps mort.

T13 = 10s temps de formation de la feuille.

T14 = 2,8s temps mort.

T15 = 15s récupération des eaux blanches dans le réservoir.

T16 = 0.1s arrêt puis temps mort.

T17 = 60s vidange du réservoir,

Tous ces temps sont modifiables directement sur le programmateur interne.

**MISE EN FEUILLE**

Paramétrer la formette de rétention automatisée suivant le système étudié (cf. Paramètres fermette). Placer une toile de 80 mesh.

1) Préparer 3 béchers en plastique de 11 et y ajouter le poids de pâte humide provenant du thickstock placé sous agitation. Cette quantité dépendra directement du grammage auquel on travaille.
Exemple : à 80 g/m2 et à 1,5 % de consistance, sachant que la surface de la formette est de 0,028 m2; il faudra

prélever une quantité de pâte humide égale à :

$$\text{Pâte humide} = 100*(80*0,028)/1,5)$$

2) Ramener à un poids de 560 g avec de l'eau du robinet.

3) Verser l'ensemble dans le réservoir de la formette puis préparer les additifs (coagulants, agents de rétention, ...).

4) Lancer la séquence et verser les additifs aux différents points sélectionnés.

5) Récupérer la feuille X (1ère passe) pour en déterminer le poids sec et le taux de cendres.

6) Récupérer les eaux blanches pour y faire les mesures de turbidité, les MES et les utiliser comme eaux de dilution dans le second bêcher (560 ml).

7) Dans le cas de la seconde fouille (R1), seule la turbidité est faite, la feuille est récupérée pour avoir un avis permanent sur la qualité de la formation et les eaux blanches sont utilisées comme eaux de dilution pour la troisième feuille.

8) La 3ème fouille (R2) réalisée sera exactement testée comme la 1ère (X).

Récapitulatif des tests rentrant en Jeu dans la détermination de la rétention et l'égouttage:

- dosage des matières en suspension (cf. procédure des MES)
- dosage des cendres (cf. procédure des cendres)
- détermination des poids sec des feuilles (cf. procédure de siccité)
- indice d'égouttage CSF (cf. procédure de CSF).

**MESURE DES MES**

Procédure

1) A partir des eaux blanches sous toile, agiter les eaux avec une spatule.

2) Prélever un échantillon proche de 50 ml (notée V) dans un cylindre gradué.

3) Peser un filtre sec Millipore de porosité 0,22 μm et de diamètre 4,25 cm (humidité connue).

4) Filtrer les V ml sur le système millipore.

5) Rincer le cylindre avec V ml d'eau puis verser l'eau sur le filtre.

6) Récupérer le filtre et le placer dans l'étuve à 105°C.

7) 5 minutes plus tard, récupérer le filtre sec et le peser.

La quantité de MES = (poids sec filtre charge-poids sec du filtre*0,98)*1000/V (convertir en mg/l).

**MESURE DU TAUX DE CENDRES**

Procédure :

1) Récupérer les feuilles sèches et les placer dans les creusets numérotés, bien les enfoncer pour une combustion lente.

2) Noter le poids de l'ensemble sur la balance de précision.

3) Remplir le four dans un ordre bien spécifique pour se rappeler de l'emplacement des échantillons.

4) Régler le four à une température de 575°C ± 25°C.

5) Chauffer pendant 5 heures.

6) Laisser refroidir les échantillons à une température de 400°C puis les placer dans le dessiccateur au moyen de la pince.

7) Une fois revenu à température ambiante, peser les cendres.

Calculs :

**% cendres dans l'échantillon = ((masse de cendres)/(poids sec de la feuille))*100.**

***B. TRAITEMENT D'EAUX***

**PROTOCOLE D'UTILISATION DE LA CELLULE DE FILTRATION SOUS PRESSION POUR LA DÉTERMINATION DE LA SICCITÉ**

ÉQUIPEMENT:

- Béchers de 400 ml.
- Filtre Buchner ∅ 90 mm.
- Toile de filtre à bandes x 2.
- Éprouvette graduée de 250 ml.
- Chronomètre.
- Cellule de filtration équipée d'un coussin gonflable.
- Pompe à pied.
- Bécher de 1000 ml.
- Gabarit.
- Balance infra-rouge.
- Coupelles aluminium.

1) ÉGOUTTAGE SUR FILTRE-BUCHNER

1.1 - Conditionner 200 ml de boue par la méthode des transvasements avec le floculant choisi au dosage optimal.

1.2 - Noter le nombre de transvasements effectués pour obtenir la floculation optimale.

1.3 - Filtrer sur filtre-buchner équipé d'un filtre type " filtre à bandes presseuses".

1.4 - Noter la durée d'égouttage T, la clarté de filtres $C_f$ et le volume du filtrat $V_f$.

2) DÉSHYDRATATION SOUS PRESSION

2.1 - Installer le filtre-buchner contenant la boue égouttée sur la partie inférieure de l'appareil.

2.2 - Placer un second filtre au-dessus puis ajouter le disque plastique amovible.

2.3 - Mettre en place le coussin gonflable relié à la partie supérieure de la cellule et visser solidement l'ensemble avec les deux vis fixées sur la partie inférieure.

2.4 - Relier la pompe à pied à la cellule et la poser sur un récipient (type bêcher 1 1.).

2.5 - Appliquer une pression progressive par pallier de 1 bar jusqu'à 5 bars. Chaque hausse de pression est effectuée après arrêt total de l'écoulement du filtrat ou après une minute sous pression.

2.6 - Enlever le coussin et démouler le gâteau obtenu sur une surface sèche.

3) - MESURE DE LA SICCITÉ

3.1 - Tarer une coupelle aluminium sur une balance à infra-rouge.

3.2 - A l'aide d'un gabarit déterminé, découper une partie du gâteau déshydraté au centre du filtre.

3.3 - Déposer la partie découpée du gâteau dans la coupelle.

3.4 - Placer la balance Infra-rouge en position auto et appliquer une température de 140˚C jusqu'à stabilité de la mesure.

3.5 - Noter le pourcentage de matières sèches obtenu déterminant la siccité.

**ESSAIS DE LABORATOIRE FILTRE A BANDES**

A) MATÉRIEL :

- Béchers de 400 ml.
- Buchner de 90 mm de diamètre.
- Tolle de filtre à bandes de 90 mm de diamètre.
- Éprouvette graduée de 250 ml.
- Chronomètre.

B) PROCÉDURE

1) Détermination de la dose de polymère;

- Mettre 200 ml de boues dans un bêcher de 400 ml.
- Ajouter 5 ml de l'un des polymères à tester.
- Mélanger le floculant à la boue en transvasant de bêcher en bêcher jusqu'à la floculation.
- Si l'on obtient une bonne floculation répéter l'opération avec 1 ml de moins.
- Si l'on n'obtient pas de floculation répéter l'opération avec 1 ml de plus.
- Le dosage optimal est le plus petit pour obtenir la floculation.

2) Évaluation des polymères :

- Mettre 200 ml de boues dans un bécher de 400 ml.
- Ajouter la quantité de polymère déterminée au point No 1.
- Mélanger le polymère par transvasement de bécher à bécher.
- Noter le nombre de transvasements nécessaires pour obtenir la floculation.
- Placer la tolle de filtre dans le buchner et mouiller l'ensemble.
- Placer le buchner sur l'éprouvette graduée.
- Verser la boue floculée dans le buchner et démarrer le chronomètre.
- Noter le volume écoulé après 5, 10, 15 et 30 secondes.
- Répéter l'opération avec chaque polymère à tester.

C) INTERPRÉTATION

- Le meilleur produit est celui qui libère le maximum d'eau en un minimum de temps.
- Le nombre de transvasements donne une idée de la capacité du polymère à se mélanger à la boue.
- Si la zone d'égouttage du filtre est très courte (moins de 1 mètre), il faut tenir compte du volume égoutté en 10 secondes.

**NOTE.**

Si la concentration de dissolution utilisée industriellement est inférieure à 3 g/l il est important de travailler à la même concentration.
Si les résultats obtenus ne permanent pas de différencier certains produits Il faut refaire ces tests avec deux ou trois dosages différents.

## TABLEAU B

Type de pâte : 70 % KF, 10 % KR, 20 % PM, 20 % GCC.
CSF : 354
Consistance (avt dilution) : 1,5 %

Vitesse rot. : 1500/1000
pH : pâte : 7,5
G80

| Essai | Catégorie | A. Rét | | Cplt | | Cha Ml | Ash | (g) | Ash | Ctn% | Turb 30' | Turb 30' | |
|---|---|---|---|---|---|---|---|---|---|---|---|---|---|
| | | | % | | % | (%) | X | R2 | X | R2 | X | R2 | CSF |
| 14 | 2-2-7,1 | U5H27SO5 | 0,2 | - | - | 20 | 0,2955 | 0,3461 | 72,86% | 88,67% | 18 | 45 | |
| 15 | | PEI | 0,2 | - | - | 20 | 0,2306 | 0,2695 | 59,13% | 76,97% | 83 | 124 | |
| 28 | 2-2-7,1 | U5H27SO5 | 0,5 | - | - | 20 | 0,2954 | 0,3374 | 73,14% | 84,67% | 130 | 119 | |
| 29 | | PEI | 0,5 | - | - | 20 | 0,2137 | 0,2656 | 62,70% | 74,88% | 95 | 117 | |

Type de pâte : 70 % KF, 10 % KR, 20 % PM, 20 % GCC.
CSF : 354
Consistance (avt dilution) : 1,5 %

Vitesse rot. : 1500/1000
pH : pâte : 7,5
G80

| Essai | Catégorie | A. Rét | | Cplt | | Cha Ml | Turb | | | MES | mg/l | Pds | Feuille | % rétent. | % rétent. |
|---|---|---|---|---|---|---|---|---|---|---|---|---|---|---|---|
| | | t=10s | % | t=60s | % | (%) | X | R1 | R2 | X | R2 | X | R2 | X | R2 |
| 14 | 2-2-7,1 | U5H27SO5 | 0,2 | - | - | 20 | 540 | 486 | 437 | 214,1 | 215 | 2,3206 | 2,3 | 95,09% | 95,03% |
| 15 | | PEI | 0,2 | - | - | 20 | 937 | 1916 | 2345 | 278,1 | 385,4 | 2,1806 | 2,1702 | 93,33% | 90,95% |
| 28 | 2-2-7,1 | U5H27SO5 | 0,5 | - | - | 20 | 666 | 670 | 963 | 232,4 | 270,5 | 2,3149 | 2,3252 | 94,68% | 93,68% |
| 29 | | PEI | 0,5 | - | - | 20 | 695 | 918 | 1430 | 244,3 | 339,7 | 1,9178 | 2,2167 | 93,34% | 92,09% |

# TABLEAU C

DATE : 03/10/96

Type de pâte : 70 % KF, 10 % KR, 20 % PM, 20 % GCC.
CSF : 354
Consistance (avt dilution) : 1,5 %

Vitesse rot. : 1500/1000
pH : pâte : 7,5
G80

## Essai n° 1 à divers taux d'hydrolyse.

| Protocole | | A. Rét | | Cplt | | ChaMl | Turb | | | MES | mg/l | Pds | Feuille | % rétent. | % rétent. |
|---|---|---|---|---|---|---|---|---|---|---|---|---|---|---|---|
| | % | t=10s | % | t=60s | % | (%) | X | R1 | R2 | X | R2 | X | R2 | X | R2 |
| 1 | | — | - | - | - | 20 | >4000 | 3580 | 3360 | 786,9 | 1470,48 | 2,0867 | 2,0554 | 82,56% | 71,40% |
| 2 | | 4 % hydrol. | 0,5 | - | - | 20 | 2321 | 1552 | 1180 | 326,1 | 298,1 | 2,324 | 2,242 | 92,71% | 93,07% |
| 3 | | 8 % | 0,5 | - | - | 20 | 1898 | 704 | 512 | 289 | 210,7 | 2,3686 | 2,5576 | 93,60% | 95,59% |
| 4 | | 15 % | 0,5 | - | - | 20 | 1608 | 804 | 509 | 262,7 | 234,6 | 2,3414 | 2,3324 | 94,09% | 94,67% |
| 5 | | 25 % | 0,5 | - | - | 20 | 630 | 331 | 195 | 186,7 | 167,2 | 2,525 | 2,6095 | 96,04% | 96,74% |
| 6 | | 32 % | 0,5 | - | - | 20 | 550 | 261 | 188 | 169,8 | 124,1 | 2,3006 | 2,4431 | 96,58% | 97,23% |
| 7 | | PEI | 0,5 | - | - | 20 | 560 | 963 | 1674 | 200,9 | 352,2 | 2,1546 | 2,2046 | 95,04% | 91,79% |

| Essai | | A. Rét | | Cplt | | Cha Ml | Ash | (g) | Ash | Ctn% | Turb 30' | Turb 30' | |
|---|---|---|---|---|---|---|---|---|---|---|---|---|---|
| | % | | % | | % | (%) | X | R2 | X | R2 | X | R2 | CSF |
| 1 | | - | - | - | - | 20 | 0,0411 | 0,0844 | 10,06% | 21,41% | 3658 | 3845 | |
| 2 | | U5H4SO5 | 0,5 | - | - | 20 | 0,254 | 0,341 | 61,35% | 89,69% | 34 | 35 | |
| 3 | | U5H8SO5 | 0,5 | - | - | 20 | 0,2613 | 0,3802 | 62,00% | 87,31% | 22 | 17 | |
| 4 | | U5H15SO5 | 0,5 | - | - | 20 | 0,2649 | 0,3634 | 63,79% | 92,28% | 30 | 16 | |
| 5 | | U5H25SO5 | 0,5 | - | - | 20 | 0,3218 | 0,4008 | 73,03% | 90,73% | 22 | 16 | |
| 6 | | U5H32SO5 | 0,5 | - | - | 20 | 0,3211 | 0,3981 | 80,93% | 97,33% | 24 | 15 | |
| 7 | | PEI | 0,5 | - | - | 20 | 0,2431 | 0,2989 | 63,44% | 78,41% | 21 | 39 | |

**Tableau A**

V-501

4,4'-Azobis (4-cyanopentanoic acid)

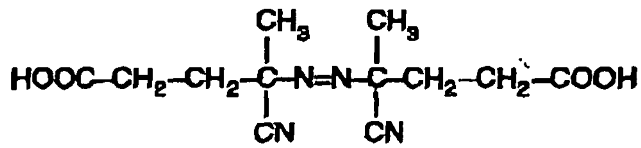

V-70

2,2'-Azobis (4-methoxy-2,4-dimethylvaleronitrile)

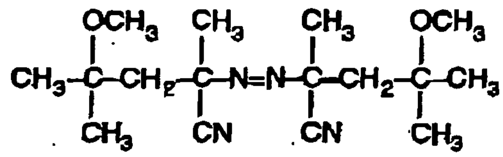

VA-044

2,2'-Azobis (N,N'-dimethyleneisobutyramidine) dihydrochloride

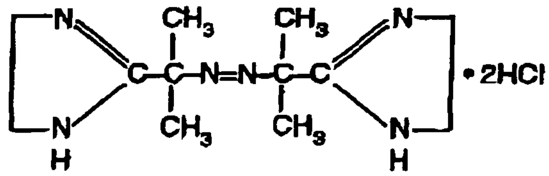

V-50

2,2'-Azobis (2-amidino-propane) dinydrochloride

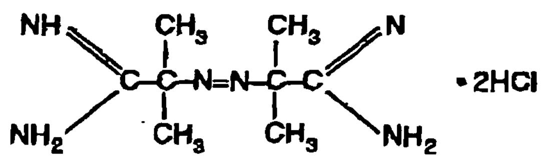

V-60

2,2'-Azobisisobutyronitrile

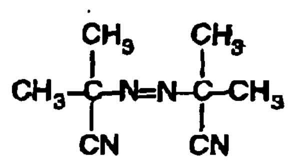

## Revendications

1. Procédé de synthèse de polymères (ou copolymères) de type PVA (polyvinylamine) en poudre, **caractérisé en ce que** la polymérisation est une polymérisation en masse, en milieu aqueux ou dans l'eau, et l'on initie la polymérisation à basse température entre -2°C et +10°C de préférence voisine de 0°C, et sous pression normale ou atmosphérique, à partir du monomère N-vinylformamide, en présence d'un initiateur de polymérisation comprenant au moins une combinaison de système redox et d'initiateur de type azoïque.

2. Procédé de synthèse des polymères de type PVA (polyvinylamine) en poudre, selon la revendication 1, **caractérisé en ce que** la polymérisation se déroule à moins de 100 °C, et est effectuée sous pression sensiblement normale ou même de préférence atmosphérique.

3. Procédé de synthèse des polymères de type PVA (polyvinylamine) en poudre, selon la revendication 1 ou 2, **caractérisé en ce qu'**il consiste à:

   a) - polymériser dans l'eau, un milieu aqueux ou en masse, le monomère vinylformamide à très basse température, c'est à dire à une température d'initiation de la polymérisation de -2°C à +2°C et à une température de

fin de polymérisation qui reste inférieure à 100˚C, sous une pression sensiblement normale, notamment atmosphérique, en présence d'un initiateur de polymérisation comprenant au moins une combinaison de système redox et d'intitiateur de type azoïque,

b) - obtenir ainsi un gel de polymère PVA non ionique (que l'on n'isole pas obligatoirement),

c) - broyer le gel ainsi obtenu par des moyens mécaniques connus comme une vis sans fin ou, en laboratoire, un hacheur ménager du type Moulinex (TM) ou analogue,

d) - hydrolyser le gel obtenu.

**4.** Procédé de synthèse des polymères de type PVA (polyvinylamine) en poudre, selon la revendication 3, **caractérisé en ce que** l'hydrolyse est effectuée sur le gel, qui contient de 30 à 60 % d'eau environ, de préférence autour de 50 % d'eau.

**5.** Procédé de synthèse des polymères de type PVA (polyvinylamine) en poudre, selon l'une quelconque des revendications 3 ou 4, **caractérisé en ce que** l'hydrolyse est effectuée en milieu acide ou basique OH(-) ou H (+), notamment en utilisant comme agent d'hydrolyse la soude NaOH ou l'acide phosphorique H3PO4.

**6.** Procédé de synthèse des polymères de type PVA (polyvinylamine) en poudre, selon l'une quelconque des revendications 3 à 5, **caractérisé en ce que** on effectue l'hydrolyse sur le gel en fin de polymérisation (température du gel environ 90 - 95 ˚C) sans étape supplémentaire spécifique de chauffage pour réaliser l'hydrolyse.

**7.** Procédé de synthèse des polymères de type PVA (polyvinylamine) en poudre, selon l'une quelconque des revendications 3 à 6, **caractérisé en ce que** le taux d'hydrolyse est compris entre 20 et 70 %, de préférence 45 et 60 %, de préférence autour de 40 % de fonctions amine.

**8.** Procédé de synthèse des polymères de type PVA (polyvinylamine) en poudre, selon l'une quelconque des revendications 1 à 7, **caractérisé en ce que** le système redox utilisé pour la polymérisation est constitué par la combinaison de tertiobutyle hydroperoxyde ou TBHP et de métabisulfite de sodium.

**9.** Procédé de synthèse des polymères de type PVA (polyvinylamine) en poudre, selon l'une quelconque des revendications 1 à 8, **caractérisé en ce que** les systèmes redox utilisables sont les suivants :

oxydants : hydroperoxydes, comme hydroperoxyde de cumène, eau oxygénée, ou persulfates,
réducteurs : NaFS ou formaldéhyde-sulfoxylate de sodium, sels de sulfites et bisulfites, SO2.

**10.** Procédé de synthèse des polymères de type PVA (polyvinylamine) en poudre, selon l'une quelconque des revendications 1 à 9, **caractérisé en ce que** l'initiateur azoïque utilisé est le
AZDN (azobisisobutyronitrile).

**11.** Procédé de synthèse des polymères de type PVA (polyvinylamine) en poudre, selon l'une quelconque des revendications 1 à 10, **caractérisé en ce que** les catalyseurs azoïques utilisables sont les produits identifiés ci-dessous :

V-501

4,4'-Azobis (4-cyanopentanoic acid)

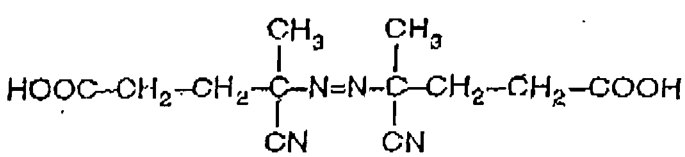

V-70

2,2'-Azobis (4-methoxy-2,4-dimethylvaleroritrile)

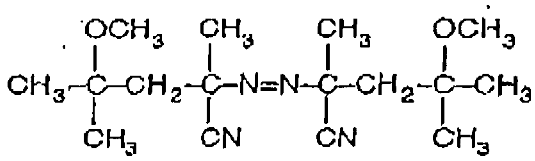

(suite)

VA-044

2,2'-Azobis (N,N'-dimethyleneisobutyramidine) ditrydrochloride

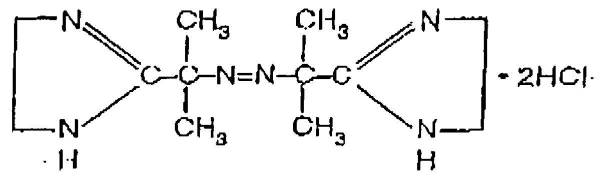

V-50

2,2'-Azobls (2-amidino-propane) dinydrochloride

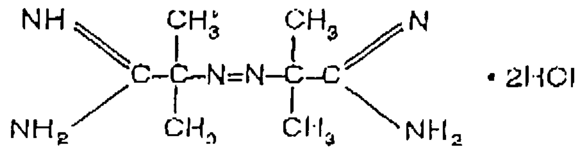

V-60

2,2'-Azobislsobutyronitrile

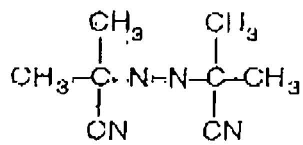

**12.** Procédé de synthèse de copolymères de PVA selon l'une quelconque des revendications 1 à 11, **caractérisé en ce que** le N-vinylformamide est copolymérisé avec tout monomère copolymérisable avec lui, choisi notamment parmi l'acrylamide, l'acide (méth)acrylique, les (méth)acrylates, les monomères connus sous les abréviations de APTAC (acrylamidopropyltrimethylammonium chlorure) MAPTAC (meth(APTAC)), AMPS (acrylamidomethylpropane sulfonique acide), le N-vinylacétate, l'acrylonirile, le DADMAC (diallyldimethylammonium chlorure), éventuellement substitués, notamment l'acrylamide substitué.

**Claims**

**1.** Process for synthesising powdered PVA (polyvinylamine) polymers (or copolymers), **characterised in that** the polymerisation is a polymerisation performed without solvent, in an aqueous medium or in water and that the polymerisation is initiated at low temperature between -2°C and +10°C, preferably close to 0°C, and under normal or atmospheric pressure, starting from monomeric N-vinyl formamide, in the presence of a polymerisation initiator comprising at least one combination of redox system and azo initiator.

**2.** Process for synthesising powdered PVA (polyvinylamine) polymers according to claim 1, **characterised in that** the polymerisation takes place at less then 100°C and is performed under approximately normal pressure or even preferably atmospheric pressure.

**3.** Process for synthesising powdered PVA (polyvinylamine) polymers according to claim 1 or 2, **characterised in that** it consists in:

a) polymerising the vinyl formamide monomer in water, in an aqueous medium or without solvent, at very low temperature, in other words at a polymerisation initiation temperature of -2°C to +2°C and at a final polymerisation temperature remaining below 100°C, under approximately normal pressure, in particular atmospheric pressure, in the presence of a polymerisation initiator comprising at least one combination of redox system and azo initiator,
b) obtaining in this way a non-ionic PVA polymer gel (which does not necessarily have to be isolated),
c) grinding the gel obtained in this way by known mechanical means such as an endless screw or, in the laboratory, a Moulinex(TM) or similar kitchen mincer,
d) hydrolysing the gel obtained.

**4.** Process for synthesising powdered PVA (polyvinylamine) polymers according to claim 3, **characterised in that**

hydrolysis is performed on the gel, which contains approximately 30 to 60% water, preferably around 50% water.

**5.** Process for synthesising powdered PVA (polyvinylamine) polymers according to one of claims 3 or 4, **characterised in that** the hydrolysis is performed in an acid or basic OH(-) or H(+) medium, in particular using sodium hydroxide NaOH or phosphoric acid $H_3PO_4$ as hydrolysing agent.

**6.** Process for synthesising powdered PVA (polyvinylamine) polymers according to one of claims 3 to 5, **characterised in that** the hydrolysis is performed on the gel at the end of polymerisation (gel temperature approximately 90-95˚C), with no specific additional heating step to perform the hydrolysis.

**7.** Process for synthesising powdered PVA (polyvinylamine) polymers according to one of claims 3 to 6, **characterised in that** the rate of hydrolysis is between 20 and 70%, preferably 45 and 60%, preferably around 40% of amine functions.

**8.** Process for synthesising powdered PVA (polyvinylamine) polymers according to one of claims 1 to 7, **characterised in that** the redox system used for the polymerisation is formed by the combination of tert-butyl hydroperoxide or TBHP and sodium metabisulfite.

**9.** Process for synthesising powdered PVA (polyvinylamine) polymers according to one of claims 1 to 8, **characterised in that** the redox systems that can be used are as follows:

oxidising: hydroperoxides, such as cumin hydroperoxide, oxygenated water or persulfates,
reducing: NaFS or sodium formaldehyde sulfoxylate, sulfite and bisulfite salts, $SO_2$.

**10.** Process for synthesising powdered PVA (polyvinylamine) polymers according to one of claims 1 to 9, **characterised in that** the azo initiator used is
AZDN (azobisisobutyronitrile).

**11.** Process for synthesising powdered PVA (polyvinylamine) polymers according to one of claims 1 to 10, **characterised in that** the azo catalysts that can be used are the products listed below:

V-501

4,4'-Azobis-(4-cyanopentanoic acid)

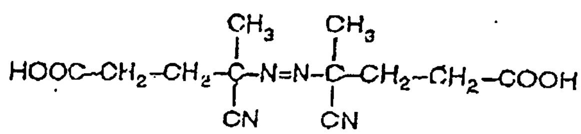

V-70

2,2'-Azobis-(4-methoxy-2,4-dimethyl valeronitrile)

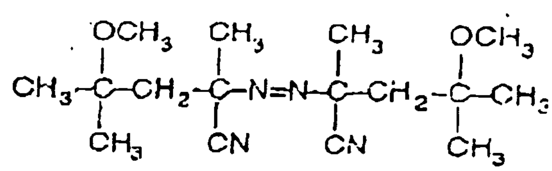

VA-044

2,2'-Azobis-(N,N' dimethylene isobutyramidine) dihydrochloride)

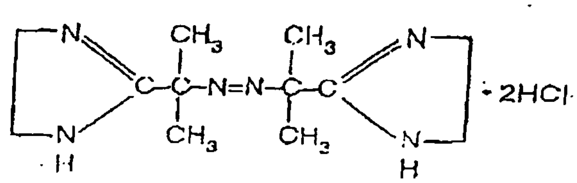

V-50

2,2'-Azobis-(2-amidinopropane) dihydrochloride

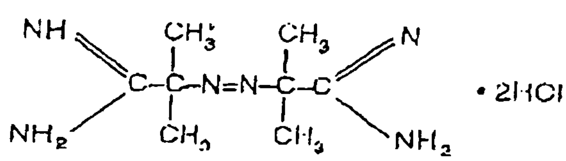

(continued)

V-60

2,2'-Azobisisobutyronitrile

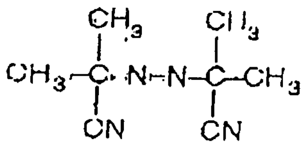

**12.** Process for synthesising PVA copolymers according to one of claims 1 to 11, **characterised in that** N-vinyl formamide is copolymerised with any monomer that is copolymerisable therewith, selected in particular from optionally substituted acrylamide, (meth)acrylic acid, (meth)acrylates, the monomers known under the abbreviations APTAC (acrylamidopropyl trimethylammonium chloride), MAPTAC (meth(APTAC)), AMPS (acrylamidomethylpropane sulfonic acid), N-vinyl acetate, acrylonitrile, DADMAC (diallyldimethylammonium chloride), in particular substituted acrylamide.

**Patentansprüche**

**1.** Syntheseverfahren für Polymere (oder Copolymere) der Art PVA (Polyvinylamin) in Pulverform, **dadurch gekennzeichnet, dass** die Polymerisation eine Blockpolymerisation in wässrigem Medium oder in Wasser ist und die Polymerisation bei niedriger Temperatur zwischen -2˚C und +10˚C, vorzugsweise um 0˚C, und unter Normal- oder Atmosphärendruck ausgehend von N-Vinylformamidmonomer im Beisein eines Polymerisationsstarters ausgelöst wird, der mindestens eine Kombination aus einem Redoxsystem und einem Starter der Azofarbstoffart umfasst.

**2.** Syntheseverfahren nach Anspruch 1, für Polymere der Art PVA (Polyvinylamin) in Pulverform, **dadurch gekennzeichnet, dass** die Polymerisation bei weniger als 100˚C abläuft und im Wesentlichen unter Normal- oder sogar vorzugsweise Atmosphärendruck stattfindet.

**3.** Syntheseverfahren nach Anspruch 1 oder 2, für Polymere der Art PVA (Polyvinylamin) in Pulverform, **dadurch gekennzeichnet, dass** es darin besteht:

a) - das Vinylformamidmonomer in Wasser, einem wässrigen Medium oder in Masse bei sehr niedriger Temperatur, d.h. bei einer Polymerisationsstarttemperatur von -2˚C bis +2˚C und bei einer Polymerisationsendtemperatur, die unter 100˚C bleibt, unter im Wesentlichem Normal-, insbesondere Atmosphärendruck, im Beisein eines Polymerisationsstarters zu polymerisieren, der mindestens eine Kombination aus einem Redoxsystem und einem Starter der Azofarbstoffart umfasst,
b) - somit ein nicht ionisches PVA-Gelpolymer zu erhalten (das nicht unbedingt abgeschieden wird),
c) - das so erhaltene Gel im Labor mit bekannten mechanischen Einrichtungen wie einer Schnecke, einem Haushaltszerkleinerer der Art Moulinex (TM) oder dergleichen fein zu mahlen,
d) - das erhaltene Gel zu hydrolysieren.

**4.** Syntheseverfahren nach Anspruch 3, für Polymere der Art PVA (Polyvinylamin) in Pulverform, **dadurch gekennzeichnet, dass** die Hydrolyse am Gel stattfindet, das ca. 30 bis 60 % Wasser, vorzugsweise um die 50 % Wasser enthält.

**5.** Syntheseverfahren nach einem der Ansprüche 3 oder 4, für Polymere der Art PVA (Polyvinylamin) in Pulverform, **dadurch gekennzeichnet, dass** die Hydrolyse in saurem oder basischem OH(-)- oder H(+)-Medium stattfindet, wobei als Hydrolysemittel insbesondere Natriumkarbonat NaOH oder Phosphorsäure $H_3PO_4$ verwendet wird.

**6.** Syntheseverfahren nach einem der Ansprüche 3 bis 5, für Polymere der Art PVA (Polyvinylamin) in Pulverform, **dadurch gekennzeichnet, dass** die Hydrolyse am Gel am Ende der Polymerisation (Temperatur des Gels ca. 90 - 95˚C) ohne spezifischen zusätzlichen Erwärmungsschritt zur Durchführung der Hydrolyse stattfindet.

**7.** Syntheseverfahren nach einem der Ansprüche 3 bis 6, für Polymere der Art PVA (Polyvinylamin) in Pulverform, **dadurch gekennzeichnet, dass** der Hydrolyseanteil zwischen 20 und 70%, vorzugsweise 45 und 60%, vorzugsweise um die 40% Amingruppen umfasst.

**8.** Syntheseverfahren nach einem der Ansprüche 1 bis 7, für Polymere der Art PVA (Polyvinylamin) in Pulverform, **dadurch gekennzeichnet, dass** das für die Polymerisation verwendete Redoxsystem aus der Kombination von Tert-Butylhydroperoxid oder TBHP und Natriummetabisulfit besteht.

**9.** Syntheseverfahren nach einem der Ansprüche 1 bis 8, für Polymere der Art PVA (Polyvinylamin) in Pulverform, **dadurch gekennzeichnet, dass** die verwendbaren Redoxsysteme die folgenden sind:

Oxidationsmittel: Hydroperoxide wie Cumolhydroperoxid, Wasserstoffperoxid oder Persulfate,
Reduktionsmittel: NaFS oder Natrium-Formaldehydsulfoxylat, Sulfit- und Bisulfitsalze, $SO_2$.

**10.** Syntheseverfahren nach einem der Ansprüche 1 bis 9, für Polymere der Art PVA (Polyvinylamin) in Pulverform, **dadurch gekennzeichnet, dass** der verwendete Azo-Starter
AZDN (Azo-Bis-Isobutyronitril) ist.

**11.** Syntheseverfahren nach einem der Ansprüche 1 bis 10, für Polymere der Art PVA (Polyvinylamin) in Pulverform, **dadurch gekennzeichnet, dass** die verwendbaren Azo-Reaktionsbeschleuniger die nachstehend ausgewiesenen Produkte sind:

V-501

4,4'-Azo-Bis(4-cyanopentansäure)

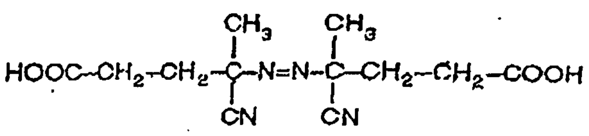

V-70

2,2'-Azo-Bis(4- methoxy-2,4-dimethylvaleronitril)

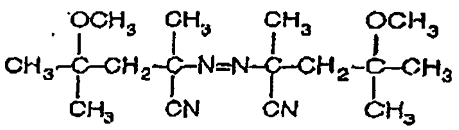

VA-044

2,2'-Azo-Bis(N,N'-dimethylenisobutyramidin) dihydrochlorid

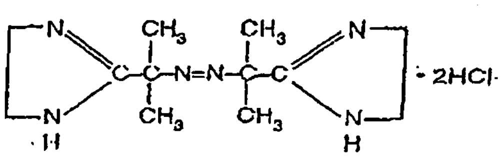

V-50

2,2'-Azo-Bis(2-amidinopropan) dihydrochlorid

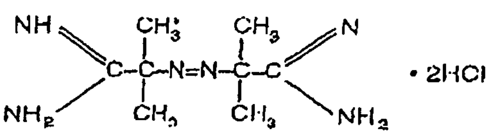

V-60

2,2'Azo-Bis-Isobutyronitril

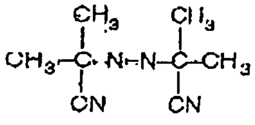

**12.** Syntheseverfahren nach einem der Ansprüche 1 bis 11, für Polymere der Art PVA (Polyvinylamin) in Pulverform, **dadurch gekennzeichnet, dass** das N-Vinylformamid mit jedem mit diesem copolymerisierbaren Monomer copolymerisiert wird, das insbesondere
aus Acrylamid, (Methacryl)säure, (Meth)acrylaten, den unter den Abkürzungen APTAC (Acrylamidopropyltrimethylammoniumchlorid), MAPTAC (Meth(APTAC)), AMPS (Acrylamidomethylpropansulfonsäure) bekannten Monomeren, N-Vinylacetat, Acrylonitril, DADMAC (Diallyldimethylammoniumchlorid), die gegebenenfalls substituiert sind, insbesondere substituiertem Acrylamid ausgewählt wird.

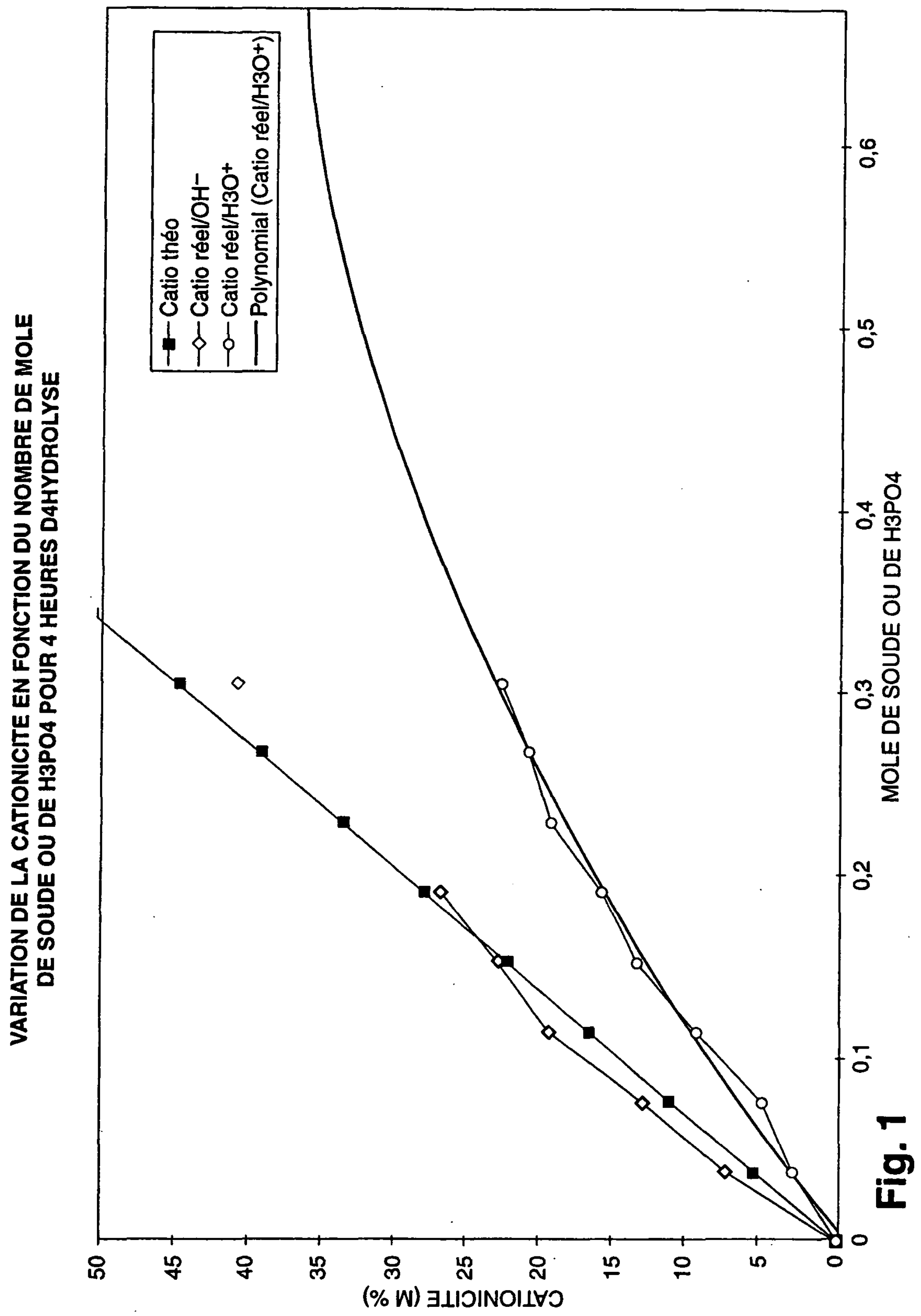
VARIATION DE LA CATIONICITE EN FONCTION DU NOMBRE DE MOLE
DE SOUDE OU DE H3PO4 POUR 4 HEURES D4HYDROLYSE
Catio théo
Catio réel/OH−
Catio réel/H3O+
Polynomial (Catio réel/H3O+)
CATIONICITE (M %)
0
5
10
15
20
25
30
35
40
45
50
MOLE DE SOUDE OU DE H3PO4
0
0,1
0,2
0,3
0,4
0,5
0,6

Fig. 1

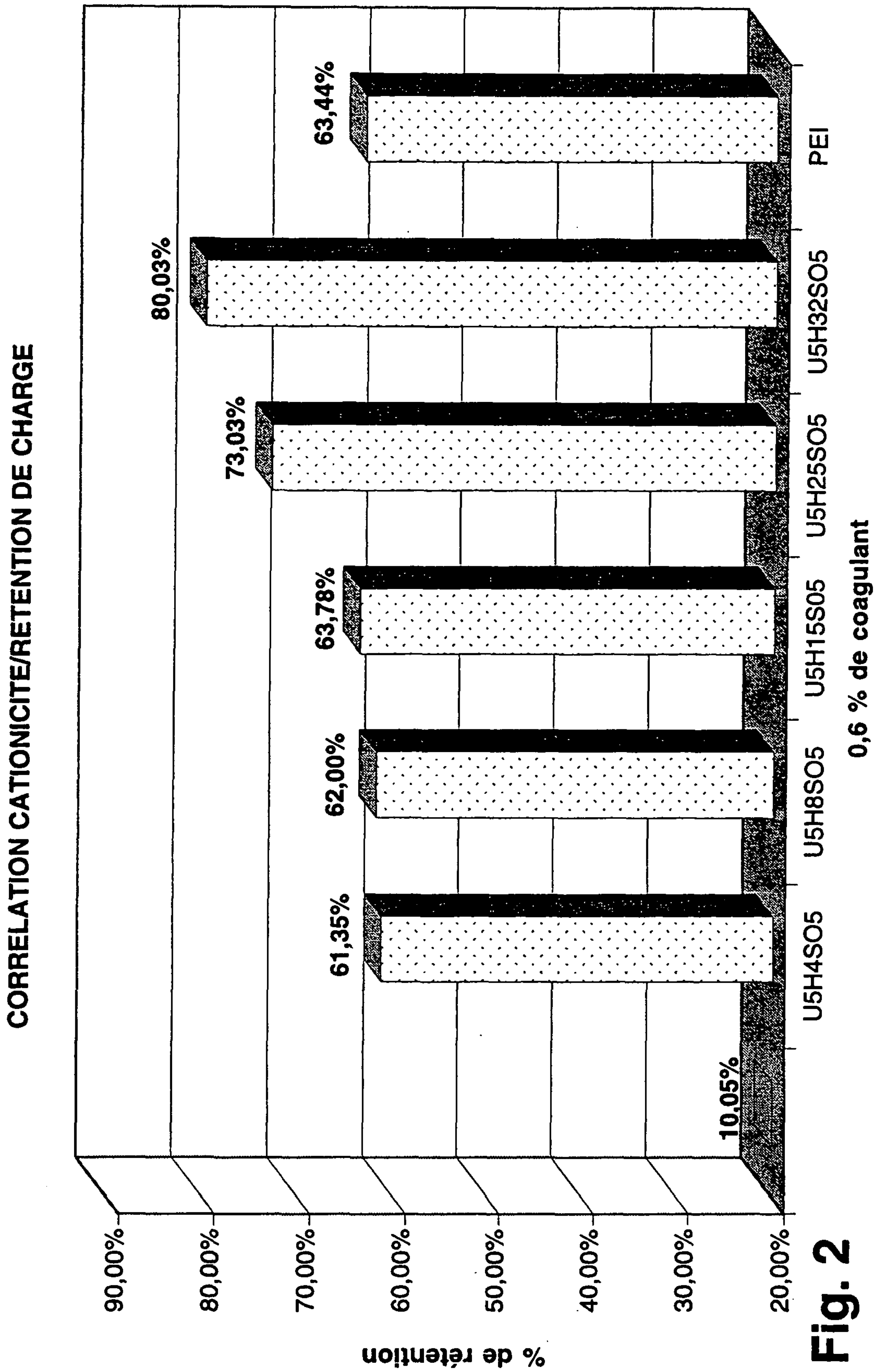
CORRELATION CATIONICITE/RETENTION DE CHARGE
% de rétention
90,00%
80,00%
70,00%
60,00%
50,00%
40,00%
30,00%
20,00%
10,05%
61,35%
62,00%
63,78%
73,03%
80,03%
63,44%
U5H4SO5
U5H8SO5
U5H15S05
U5H25SO5
U5H32SO5
PEI
0,6 % de coagulant

Fig. 2